# EUROPEAN PATENT APPLICATION

(11) **EP 4 814 315 A1**
(43) Date of publication of application: **30.09.2026**
(21) Application number: 24912412.4
(22) Date of filing: 12.12.2024
(51) Int. Cl.: F04D 29/66, F04D 17/12, F04D 29/056

(54) **COMPRESSOR AND COMPRESSOR SYSTEM**

(30) Priority: 25.12.2023 JP 2023218112
(71) Applicant: Mitsubishi Heavy Industries, Ltd., Chiyoda-ku Tokyo 100-8332 (JP)
(72) Inventor: NAGAO Hideki, Hiroshima-shi, Hiroshima 733-8553 (JP)
(74) Representative: Studio Torta S.p.A.
(86) International application number: PCT/JP2024/044042
(87) International publication number: WO 2025/142523

(57) **Abstract**

A compressor system includes a driving machine and a compressor. The compressor includes a rotor, a casing that covers the rotor, and a squeeze film damper disposed at an end portion of the rotor and configured to indirectly suppress vibration of the rotor via a fluid. The rotor includes a plurality of impellers that are adjacent to each other in an axial direction, and a bolt fastening portion that has a plurality of bolts for collectively fixing the plurality of impellers arranged in the axial direction. The impeller has a solid structure that has a filled center. The squeeze film damper is disposed at the end portion of the rotor that is not connected to another rotating machine in the axial direction.

## Description

### TECHNICAL FIELD

The present disclosure relates to a compressor and a compressor system.

Priority is claimed on Japanese Patent Application No. 2023-218112, filed December 25, 2023, the content of which is incorporated herein by reference.

### BACKGROUND ART

In general, a centrifugal compressor includes a rotor having a plurality of impellers, and a casing that covers the impellers from an outer side to form a flow path between the impellers and the casing. In the centrifugal compressor, a fluid supplied from an outside via the flow path formed in the casing is compressed by rotation of the impellers.

For example, as described in Patent Document 1, in such a centrifugal compressor, the rotor is formed by stacking a plurality of impellers in an axial direction. In the centrifugal compressor, the plurality of stacked impellers are fixed by a large tie bolt that is a shaft disposed to be inserted through large holes formed at centers of the impellers.

### Citation List

### Patent Document

Patent Document 1: United States Patent Application, Publication No. 2023-0193920

### SUMMARY OF INVENTION

### Technical Problem

Meanwhile, in a case where a rotor is rotated at a high speed, a peripheral speed on an outer peripheral surface of the rotor is increased. In order to support such a rotor having a high peripheral speed, it is necessary to reduce a size of a bearing. As a result, it is necessary to reduce a shaft diameter of the rotor. On the other hand, in order to increase the peripheral speed of an impeller by rotating the rotor at a high speed, it is necessary to increase a diameter of the impeller. In addition, in a case where a fluid is compressed in multiple stages, an axial length of the rotor is increased in proportion to a size of the impeller as the diameter of the impeller is increased. Further, as the axial length is increased, vibration generated in the rotor is increased, but it is difficult to control the large vibration because the size of the bearing that supports the rotor is reduced. Therefore, it is desired to stably suppress vibration of the rotor that is rotated at a high speed.

The present disclosure provides a compressor and a compressor system capable of stably suppressing vibration of a rotor that is rotated at a high speed.

### Solution to Problem

A compressor according to the present disclosure includes: a rotor configured to rotate around an axis; a casing is covered the rotor from an outer side in a radial direction with respect to the axis; and a squeeze film damper disposed at an end portion of the rotor and configured to indirectly suppress vibration of the rotor via a fluid, in which the rotor includes a plurality of impellers that are adjacent to each other in an axial direction in which the axis extends, and a bolt fastening portion that has a plurality of bolts each of which configured to collectively fix the plurality of impellers arranged in the axial direction, each of the plurality of impellers has a solid structure that is formed in a disk shape around the axis and has a filled center, and the squeeze film damper is disposed at the end portion of the rotor that is not connected to another rotating machine in the axial direction.

In addition, a compressor system according to the present disclosure includes: the compressor configured to compress a working fluid; and a driving machine having a drive shaft rotating around an axis and configured to drive the compressor, in which the squeeze film damper is disposed at the end portion of the rotor at a position far from the driving machine in the axial direction.

### Advantageous Effects of Invention

According to a compressor and a compressor system of the present disclosure, it is possible to stably suppress vibration of the rotor that is rotated at a high speed.

### BRIEF DESCRIPTION OF DRAWINGS

[FIG. 1] A schematic view showing a compressor system according to an embodiment of the present disclosure.
[FIG. 2] A cross-sectional view showing a schematic configuration of a compressor according to an embodiment of the present disclosure.
[FIG. 3] A cross-sectional view of a main part showing a squeeze film damper of the present embodiment.
[FIG. 4] A cross-sectional view of a main part showing a connection portion between a rotor and a transmission rotor by a second coupling of the present embodiment, which is a cross section taken along line IV-IV in FIG. 2.

### DESCRIPTION OF EMBODIMENTS

Hereinafter, an embodiment for implementing a compressor system 1 according to the present disclosure will be described with reference to the accompanying drawings. However, the present disclosure is not limited to only this embodiment.

### (Configuration of Compressor System)

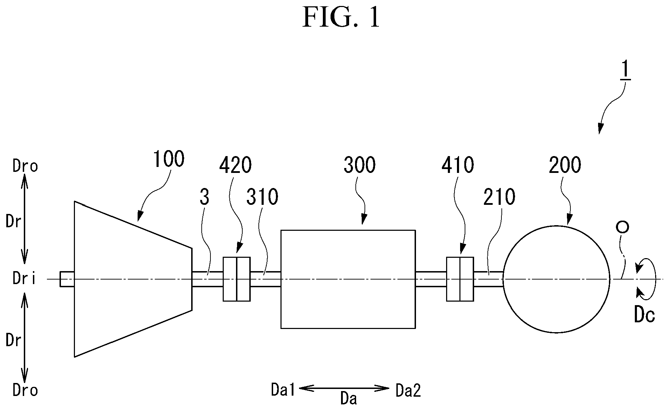

Hereinafter, a compressor system 1 according to an embodiment of the present disclosure will be described with reference to FIG. 1. The compressor system 1 is disposed, for example, in a chemical plant. As shown in FIG. 1, the compressor system 1 includes a driving machine 200, a transmission 300, a compressor 100, a first coupling 410, and a second coupling 420. The driving machine 200, the transmission 300, and the compressor 100 are disposed coaxially via the first coupling 410 and the second coupling 420 such that a central axis of each rotor 3 coincides with an axis O of the compressor 100.

Hereinafter, a direction in which the axis O extends will be referred to as an axial direction Da. A radial direction with respect to the axis O will be simply referred to as a radial direction Dr. In addition, a direction around the rotor 3 centered on the axis O will be referred to as a circumferential direction Dc. In addition, in the compressor system 1, a side on which the compressor 100 is disposed with respect to the transmission 300 will be referred to as a first side Da1 in the axial direction Da. In addition, in the compressor system 1, a side on which the compressor 100 is disposed with respect to the transmission 300 will be referred to as a second side Da2 in the axial direction Da. In addition, in the radial direction Dr, a side closer to the axis O will be referred to as an inner side Dri in the radial direction Dr. In addition, in the radial direction Dr, a side farther from the axis O will be referred to as an outer side Dro in the radial direction Dr.

The driving machine 200 is capable of driving the compressor 100. The driving machine 200 is, for example, a steam turbine that drives the compressor 100 by using steam generated in association with processing of a working fluid (fluid), or an electric motor that drives the compressor 100 at a rotation speed based on a magnitude of an externally applied voltage. The driving machine 200 in the present embodiment has a drive shaft 210. The drive shaft 210 is rotatable around the axis O.

The transmission 300 increases or decreases the rotation of the driving machine 200 by a plurality of gears and transmits the rotation to the compressor 100. The transmission 300 of the present embodiment is, for example, a speed increaser. The transmission 300 is disposed between the driving machine 200 and the compressor 100 in the axial direction Da. The transmission 300 has a transmission rotor 310. One end portion of the transmission rotor 310 is connected to the drive shaft 210 via the first coupling 410. The other end portion of the transmission rotor 310 is connected to the rotor 3 via the second coupling 420. The transmission rotor 310 is rotatable around the axis O.

### (Configuration of Compressor)

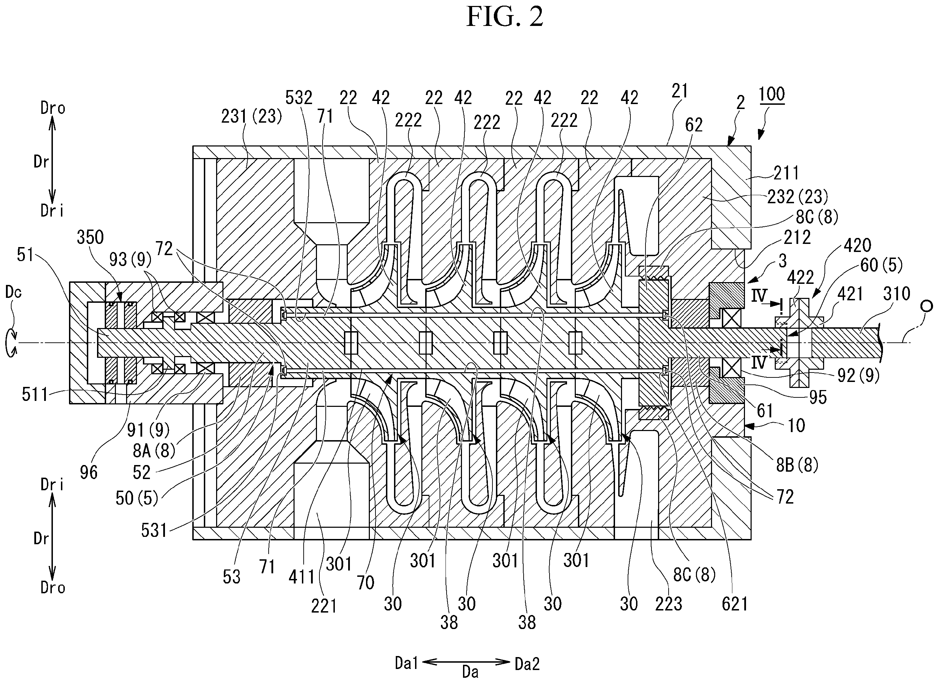

The compressor 100 is driven by the transmission of the rotation of the drive shaft 210 and compresses the working fluid. The compressor 100 is disposed on the first side Da1 in the axial direction Da with respect to the transmission 300. The compressor 100 compresses a gas as the working fluid. The compressor 100 of the present embodiment is a single-shaft multistage type centrifugal compressor (multistage centrifugal compressor) that compresses a gas having a molecular weight of 10 or less, such as a hydrogen gas. The compressor 100 is driven, for example, at a high speed of a rotation speed of 15,000 rpm or more. The power required for the compressor 100 is, for example, 1,000 kW or more. Further, the suction pressure of the compressor 100 is set to 10 barA or more. As shown in FIG. 2, the compressor 100 includes a casing 2, the rotor 3, a seal portion 8, and a bearing portion 9.

### (Configuration of Casing)

The casing 2 covers the rotor 3 from the outer side Dro in the radial direction Dr. The casing 2 of the present embodiment has an outer casing 21, a plurality of diaphragms 22, and a plurality of heads 23.

The outer casing 21 has a cylindrical shape centered on a central axis disposed coaxially with the axis O of the rotor 3. The first side Da1 (one side) of the outer casing 21 in the axial direction Da is open to a size that allows a bundle 10, which will be described later, to be inserted. An end plate 211 is formed on the second side Da2 (the other side) of the outer casing 21 in the axial direction Da. The end plate 211 has a plate shape that extends to be orthogonal to the axial direction Da. An insertion hole 212 having a size that allows the rotor 3 to be inserted and does not allow the bundle 10 to be inserted is formed in a central portion of the end plate 211. As a result, the bundle 10 is movable in the axial direction Da with respect to the outer casing 21, and is insertable into and removable from the casing 2.

The plurality of diaphragms 22 are disposed to cover the rotor 3 from the outer side Dro in the radial direction Dr. The plurality of diaphragms 22 are disposed inside the outer casing 21. The diaphragm 22 has an annular shape centered on the axis O. The plurality of diaphragms 22 are stacked to have a tubular shape extending in the axial direction Da. Outer peripheral surfaces of the adjacent diaphragms 22 are fixed to each other by welding or bolts 71. The plurality of diaphragms 22 are fixed to each other, so that a flow path for introduction into an impeller 30 is formed inside. In addition, the plurality of diaphragms 22 constitute the bundle 10 together with the head 23, the rotor 3, the seal portion 8, and the bearing portion 9. The bundle 10 is accommodated in the outer casing 21. In the bundle 10, the rotor 3, the plurality of diaphragms 22, the plurality of heads 23, the seal portion 8, and the bearing portion 9 are in a state of being movable together to form an integrated unit.

### (Configuration of Flow Path)

Here, specifically, the flow path formed in the casing 2 by the diaphragm 22 will be described in order from the upstream side, which is the first side Da1 in the axial direction Da, to the downstream side, which is the second side Da2 in the axial direction Da. In the present embodiment, the diaphragm 22 forms a suction port 221, a plurality of casing flow paths 222, and a discharge port 223 together with the outer casing 21 and the head 23 in order from the upstream side through which the gas flows.

The suction port 221 allows the gas before being compressed, which has flowed in from the outside of the casing 2, to flow into the diaphragm 22. The gas before flowing into the most upstream impeller 30 flows through the suction port 221.

The casing flow path 222 is formed in the diaphragm 22. The casing flow path 222 supplies the gas from the suction port 221 to the most upstream impeller 30, supplies the gas discharged from the upstream impeller 30 to the impeller 30 disposed downstream, or sends the gas discharged from the most downstream impeller 30 to the discharge port 223.

The discharge port 223 discharges the gas, which has flowed through the inside of the diaphragm 22 and has been compressed, to the outside of the casing 2. The discharge port 223 discharges the gas discharged from the most downstream impeller 30 to the outside.

The pair of heads 23 are annular members and are disposed inside the outer casing 21. The head 23 is formed to have a size that can close the openings at both ends of the outer casing 21. The head 23 of the present embodiment includes a suction-side head 231 that is disposed on the first side Da1 in the axial direction Da with respect to the plurality of diaphragms 22, and a discharge-side head 232 that is disposed on the second side Da2 in the axial direction Da with respect to the plurality of diaphragms 22.

The suction-side head 231 is disposed at a position closer to the suction port 221 than the discharge-side head 232. The suction-side head 231 forms the suction port 221 together with the diaphragm 22 disposed closest to the first side Da1 in the axial direction Da. The suction-side head 231 is fixed to the integrated plurality of diaphragms 22 by the bolts 71 or the like. As a result, the suction-side head 231 is integrated with the diaphragm 22.

The discharge-side head 232 is disposed at a position closer to the discharge port 223 than the suction-side head 231. The discharge-side head 232 forms the discharge port 223 together with the diaphragm 22 disposed closest to the second side Da2 in the axial direction Da. The discharge-side head 232 is fixed to the plurality of diaphragms 22 that are integrated by the bolts 71 or the like. As a result, the discharge-side head 232 is integrated with the diaphragm 22.

### (Configuration of Rotor)

The rotor 3 is accommodated inside the casing 2. The rotor 3 is rotatable around the axis O. The rotor 3 of the present embodiment includes a plurality of impellers 30, a shaft end member 5, and a bolt fastening portion 70.

The impeller 30 compresses a gas by utilizing a centrifugal force by rotating. The impeller 30 has a solid structure that is formed in a disk shape around the axis O and has a filled center. The plurality of impellers 30 are adjacent to each other in the axial direction Da. Each impeller 30 is a so-called closed impeller including a disk, a plurality of blades, and a cover. An impeller flow path 301 through which a gas flows is formed inside the impeller 30. The impeller 30 has an impeller peripheral speed of 400 m/s or more. For example, four or more impellers 30 are disposed.

The impeller 30 has a solid structure that is formed in a disk shape around the axis O and has a filled center. The impeller 30 of the present embodiment includes an impeller shaft portion 41 and an impeller outer peripheral portion 42.

The impeller shaft portion 41 is formed in a cross-sectional circular shape around the axis O. The impeller shaft portion 41 is formed to have a length in the axial direction Da that is approximately the same as the size of one diaphragm 22. The impeller outer peripheral portion 42 protrudes from the impeller shaft portion 41 toward the outer side Dro in the radial direction Dr and extends from an outer edge of the impeller shaft portion 41. The impeller outer peripheral portion 42 is formed integrally with the impeller shaft portion 41 and is formed as one member. The impeller flow path 301 is formed in the impeller outer peripheral portion 42.

In addition, the impeller shaft portion 41 of the present embodiment has a bolt hole 38. The bolt hole 38 is formed to penetrate the impeller shaft portion 41. The bolt hole 38 is formed in the impeller shaft portion 41. A plurality of (for example, twelve) bolt holes 38 are formed at intervals in the circumferential direction Dc around the axis O. The plurality of bolt holes 38 are disposed at equal intervals in the circumferential direction Dc. Each bolt hole 38 is formed to penetrate the impeller shaft portion 41 in the axial direction Da at a position deviated from the axis O to the outer side Dro in the radial direction Dr. The bolt 71, which will be described later, is inserted through each bolt hole 38.

### (Configuration of Shaft End Member)

The shaft end member 5 is connected to the impellers 30 disposed at both ends in the axial direction Da with respect to the plurality of impellers 30 arranged in the axial direction Da. The shaft end member 5 of the present embodiment includes a first shaft end member 50 and a second shaft end member 60.

The first shaft end member 50 is disposed at a position on the first side Da1 in the axial direction Da with respect to the plurality of impellers 30 that are collectively fixed. The first shaft end member 50 of the present embodiment is fixed to the most upstream impeller 30. The first shaft end member 50 is disposed at a position in the axial direction Da that overlaps with the suction-side head 231. The first shaft end member 50 of the present embodiment has a first shaft portion 51, a first supported portion 52, and a first enlarged diameter portion 53.

The first shaft portion 51 is formed in a columnar shape extending in the axial direction Da around the axis O. The first shaft portion 51 is formed in a columnar shape that is centered on the axis O and has a smaller diameter than the impeller shaft portion 41 when viewed from the axial direction Da. A thrust collar 511 is formed on the first shaft portion 51. The thrust collar 511 protrudes with respect to the first shaft portion 51 to the outer side Dro in the radial direction Dr to form an annular shape. The thrust collar 511 is formed at a position that is significantly separated from the first supported portion 52 and the first enlarged diameter portion 53 to the first side Da1 in the axial direction Da. A region where the thrust collar 511 is formed is a region that is supported by a thrust bearing 93, which will be described later. An outer diameter of the thrust collar 511 is, for example, 120 mm or more. The first shaft portion 51 can be rotatably supported by the bearing portion 9, which will be described later, about the axis O in the circumferential direction Dc.

The first supported portion 52 is a region that is supported by a first journal bearing 91, which will be described later. The first supported portion 52 is formed at a position close to the plurality of impellers 30 with respect to the first shaft portion 51. The first supported portion 52 is connected to an end portion of the first shaft portion 51 on the second side Da2 in the axial direction Da. The first supported portion 52 is disposed adjacent to the first enlarged diameter portion 53 in the axial direction Da. The first supported portion 52 protrudes to the outer side Dro in the radial direction Dr with respect to the first shaft portion 51. The first supported portion 52 extends in the circumferential direction Dc. The first supported portion 52 is formed in a disk shape that expands in the diameter toward the outer side Dro in the radial direction Dr with respect to the first shaft portion 51 when viewed from the axial direction Da. An outer diameter of the first supported portion 52 is formed to be smaller than the outer diameter of the thrust collar 511. For example, the outer diameter of the region of the first supported portion 52 that is supported by the first journal bearing 91 is 120 mm or less. The first enlarged diameter portion 53 is formed integrally with the first shaft portion 51.

The first enlarged diameter portion 53 is formed at a position close to the plurality of impellers 30 with respect to the first supported portion 52. The first enlarged diameter portion 53 is connected to an end portion of the first supported portion 52 on the second side Da2 in the axial direction Da. The first enlarged diameter portion 53 is disposed adjacent to the impeller shaft portion 41 of the most upstream impeller 30 in the axial direction Da. The first enlarged diameter portion 53 protrudes to the outer side Dro in the radial direction Dr with respect to the first supported portion 52. The first enlarged diameter portion 53 is a region protruding farthest toward the outer side Dro in the radial direction Dr in the first shaft end member 50. The first enlarged diameter portion 53 extends in the circumferential direction Dc. The first enlarged diameter portion 53 is formed in a disk shape that expands in the diameter toward the outer side Dro in the radial direction Dr with respect to the first supported portion 52 when viewed from the axial direction Da. The first enlarged diameter portion 53 is formed integrally with the first shaft portion 51 and the first supported portion 52 and is formed as one member. In addition, the first enlarged diameter portion 53 has a first nut accommodating recess 531 and a first shaft end bolt hole 532.

The first nut accommodating recess 531 is formed to be capable of accommodating a nut 72. The first nut accommodating recess 531 is recessed from a side surface of the first enlarged diameter portion 53 facing the first side Da1 in the axial direction Da toward the second side Da2 in the axial direction Da. A plurality of first nut accommodating recesses 531 are formed at positions overlapping the bolt hole 38 when viewed from the axial direction Da. The first nut accommodating recess 531 is formed in a circular shape centered on the bolt hole 38 and larger than the bolt hole 38 when viewed from the axial direction Da.

The first shaft end bolt hole 532 is formed to penetrate the first enlarged diameter portion 53 in the axial direction Da at a position deviated from the axis O to the outer side Dro in the radial direction Dr. The first shaft end bolt hole 532 penetrates the first enlarged diameter portion 53 from the first nut accommodating recess 531. A plurality of first shaft end bolt holes 532 are formed in the circumferential direction Dc around the axis O. The first shaft end bolt hole 532 is a hole formed in a circular shape that is slightly larger than an outer shape of the bolt 71 when viewed from the axial direction Da. The first shaft end bolt hole 532 of the present embodiment is formed to have the same position and the same shape as the bolt hole 38 when viewed from the axial direction Da.

The second shaft end member 60 can be connected to the rotor 3 of another rotating machine such as the driving machine 200 or the transmission 300. The second shaft end member 60 is disposed at a position on the second side Da2 in the axial direction Da with respect to the plurality of impellers 30 that are collectively fixed. The second shaft end member 60 of the present embodiment is fixed to the most downstream impeller 30. The second shaft end member 60 is disposed at a position in the axial direction Da that overlaps with the discharge-side head 232. The second shaft end member 60 has a second shaft portion 61 and a balance piston portion 62.

The second shaft portion 61 is formed in a columnar shape extending in the axial direction Da around the axis O. The second shaft portion 61 is formed in a columnar shape that is centered on the axis O and has a smaller diameter than the impeller shaft portion 41 when viewed from the axial direction Da. The second shaft portion 61 can be rotatably supported by the bearing portion 9, which will be described later, about the axis O in the circumferential direction Dc.

The balance piston portion 62 is formed at a position close to the plurality of impellers 30 with respect to the second shaft portion 61. The balance piston portion 62 is connected to an end portion of the second shaft portion 61 on the first side Da1 in the axial direction Da. The balance piston portion 62 is disposed on the second side Da2 in the axial direction Da with respect to the plurality of impellers 30. The balance piston portion 62 is disposed adjacent to the impeller shaft portion 41 in the axial direction Da. The balance piston portion 62 is disposed at a position in the axial direction Da that overlaps with the discharge-side head 232. The balance piston portion 62 protrudes to the outer side Dro in the radial direction Dr from the second shaft portion 61. The balance piston portion 62 extends in the circumferential direction Dc. The balance piston portion 62 is formed in a disk shape that expands in the diameter toward the outer side Dro in the radial direction Dr with respect to the second shaft portion 61 and the impeller shaft portion 41 when viewed from the axial direction Da. The balance piston portion 62 is formed integrally with the second shaft portion 61 and is formed as one member. The balance piston portion 62 is disposed to face a space in which the working fluid discharged from the most downstream impeller 30 is located and a space in which the working fluid supplied to the most upstream impeller 30 is located. As a result, a thrust force is generated in the balance piston portion 62 from the first side Da1 toward the second side Da2 in the axial direction Da. In addition, the balance piston portion 62 has a second nut accommodating recess 621 and a second shaft end bolt hole 622.

The second nut accommodating recess 621 is formed to be capable of accommodating the nut 72. The second nut accommodating recess 621 is recessed from a side surface of the balance piston portion 62 facing the second side Da2 in the axial direction Da toward the first side Da1 in the axial direction Da. A plurality of second nut accommodating recesses 621 are formed at positions overlapping the bolt holes 38 when viewed from the axial direction Da. The second nut accommodating recess 621 is formed in a circular shape centered on the bolt hole 38 and larger than the bolt hole 38 when viewed from the axial direction Da.

The second shaft end bolt hole 622 is formed to penetrate the balance piston portion 62 in the axial direction Da at a position deviated from the axis O to the outer side Dro in the radial direction Dr. The second shaft end bolt hole 622 penetrates the balance piston portion 62 from the second nut accommodating recess 621. A plurality of second shaft end bolt holes 622 are formed in the circumferential direction Dc around the axis O. The second shaft end bolt hole 622 is a hole formed in a circular shape that is slightly larger than an outer shape of the bolt 71 when viewed from the axial direction Da. The second shaft end bolt hole 622 of the present embodiment is formed to have the same position and the same shape as the bolt hole 38 when viewed from the axial direction Da.

### (Configuration of Bolt Fastening Portion)

The bolt fastening portion 70 collectively fixes the plurality of impellers 30 and the shaft end member 5 arranged in the axial direction Da. The bolt fastening portion 70 has the plurality of bolts 71 and the plurality of pairs of nuts 72.

The plurality of bolts 71 are inserted through each of the bolt holes 38 formed in the plurality of impellers 30. Each bolt 71 is composed of only a screw portion without a head portion, like a stud bolt. Each bolt 71 has a length in the axial direction Da such that the end portions reach the first nut accommodating recess 531 and the second nut accommodating recess 621 in a state of being inserted through the bolt hole 38. That is, the end portion of the bolt 71 on the first side Da1 in the axial direction Da is disposed to reach the first nut accommodating recess 531. ¥^^^^^^^^^^^^^^^^^^^^^^ in the impeller shaft portion 41 of the plurality of impellers 30.

The pair of nuts 72 are fastened to both end portions of each of the plurality of bolts 71. The nut 72 is fastened to the end portion of the bolt 71 on the first side Da1 in the axial direction Da in the first nut accommodating recess 531. In addition, another nut 72 is fastened to the end portion of the bolt 71 on the second side Da2 in the axial direction Da in the second nut accommodating recess 621. As a result, the plurality of impellers 30 are fixed in a state of being immovable with respect to each other.

### (Configuration of Seal Portion)

The seal portion 8 seals a space between the rotor 3 and the casing 2. The seal portion 8 of the present embodiment includes a first seal portion 8A, a second seal portion 8B, and a third seal portion 8C.

The first seal portion 8A seals a space between the suction-side head 231 and the first shaft portion 51. The first seal portion 8A is a dry gas seal. The first seal portion 8A is attachable to and detachable from the suction-side head 231 and the first shaft portion 51.

The second seal portion 8B seals a space between the discharge-side head 232 and the second shaft portion 61. The second seal portion 8B is a dry gas seal. The second seal portion 8B is attachable to and detachable from the discharge-side head 232 and the second shaft portion 61.

The third seal portion 8C seals a space between the discharge-side head 232 and the balance piston portion 62. The third seal portion 8C is a labyrinth seal. The third seal portion 8C is disposed at a position separated from the second seal portion 8B to the first side Da1 in the axial direction Da. The third seal portion 8C is fixed to the discharge-side head 232.

### (Configuration of Bearing Portion)

The bearing portion 9 rotatably supports the rotor 3 with respect to the casing 2 around the axis O. The bearing portion 9 rotatably supports only the first shaft end member 50 and the second shaft end member 60. That is, in the rotor 3, the bearing portion 9 does not overlap the plurality of impellers 30 in the axial direction Da, and only the positions of the first shaft end member 50 and the second shaft end member 60 overlap. The bearing portion 9 of the present embodiment includes a first journal bearing 91, a second journal bearing 92, and a thrust bearing 93.

The first journal bearing 91 rotatably supports the first supported portion 52. The first journal bearing 91 receives a load in the radial direction Dr acting on an end portion of the rotor 3 on the first side Da1 in the axial direction Da. The first journal bearing 91 is disposed at a position overlapping the first supported portion 52 in the axial direction Da. The first journal bearing 91 is disposed at a position close to the first enlarged diameter portion 53 with respect to the thrust collar 511 in the axial direction Da.

The second journal bearing 92 rotatably supports the second shaft portion 61. The second journal bearing 92 receives a load in the radial direction Dr acting on the end portion of the rotor 3 on the second side Da2 in the axial direction Da. The second journal bearing 92 is attached inside a cylindrical bearing holder 95. The second journal bearing 92 is disposed at a position overlapping the second shaft portion 61 in the axial direction Da.

The thrust bearing 93 rotatably supports the thrust collar 511 of the first shaft portion 51. The thrust bearing 93 receives a load in the axial direction Da acting on the rotor 3. The thrust bearing 93 is attached inside a box-shaped bearing cover 96 together with the first journal bearing 91. The thrust bearing 93 is disposed at a position overlapping the thrust collar 511 in the axial direction Da.

### (Configuration of Squeeze Film Damper)

A squeeze film damper 350 is capable of indirectly suppressing the vibration of the rotor 3 via a fluid. The squeeze film damper 350 is disposed at the end portion of the rotor 3. The squeeze film damper 350 is disposed at the end portion of the rotor 3 that is not connected to another rotating machine including the driving machine 200 and the transmission 300. The squeeze film damper 350 is disposed at the end portion of the rotor 3 at a position far from the driving machine 200 in the axial direction Da. That is, the squeeze film damper 350 is disposed at the end portion of the rotor 3 on the first side Da1 in the axial direction Da that is not connected to the transmission rotor 310. That is, the squeeze film damper 350 supports an end portion of the first shaft portion 51 in the axial direction Da. The squeeze film damper 350 is disposed on a side opposite to the first journal bearing 91 with respect to the thrust bearing 93 in the axial direction Da.

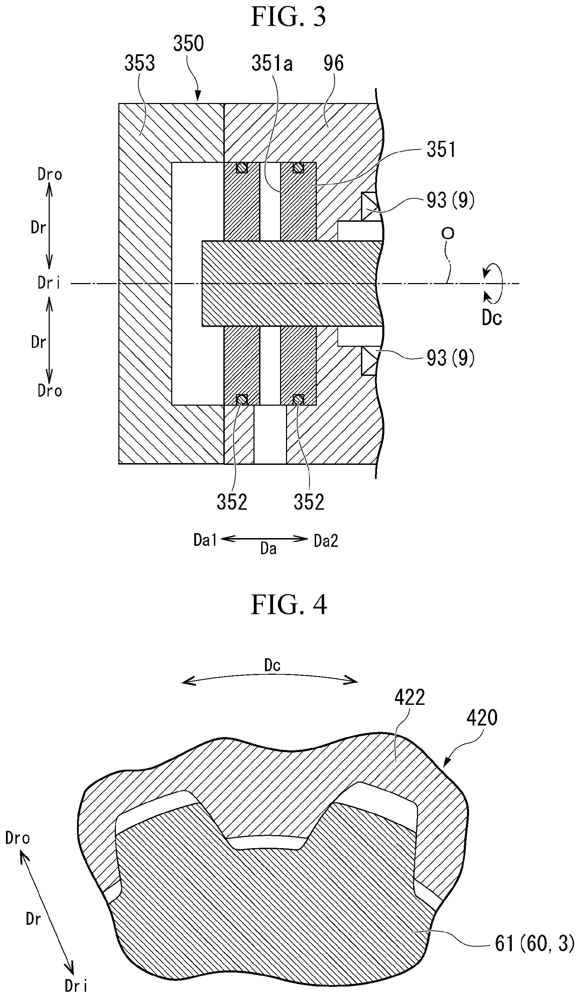

In addition, the squeeze film damper 350 is a damper that damps the vibration by supplying oil from the outside between the outer peripheral surface of the end portion of the rotor 3 and the squeeze film damper 350 and generating, by flow and compression of the oil, a resistance force against the vibration of the rotor 3. As shown in FIG. 3, the squeeze film damper 350 of the present embodiment includes an inner member 351, a seal member 352, and a cover member 353.

The inner member 351 supports the rotor 3. The inner member 351 supports the first shaft portion 51 at a position closest to the second side Da2 with respect to the rotor 3 in the axial direction Da. The inner member 351 is an annular or cylindrical member centered on the axis O. An oil supply hole 351a penetrating in the radial direction Dr is formed in the inner member 351. The oil supply hole 351a supplies oil supplied from the outside to the outer peripheral surface of the first shaft portion 51. The inner member 351 is fixed to the bearing cover 96.

The seal member 352 seals a space between the inner member 351 and the bearing cover 96. The seal member 352 is an annular O-ring centered on the axis O. The seal members 352 are disposed in a pair to be separated from each other in the axial direction Da with the oil supply hole 351a interposed therebetween.

The cover member 353 covers the end portion of the rotor 3 and the inner member 351. The cover member 353 is attachable to and detachable from the bearing cover 96. The cover member 353 is attached to the bearing cover 96 to cover the end surface of the rotor 3 from the first side Da1 in the axial direction Da.

### (Configuration of First Coupling)

As shown in FIG. 1, the first coupling 410 connects the transmission 300 and the driving machine 200. The first coupling 410 is connected to the end portion of the transmission rotor 310 and an end portion of the drive shaft 210.

### (Configuration of Second Coupling)

The second coupling (coupling) 420 connects the transmission 300 and the compressor 100. The second coupling 420 is connected to the end portion of the transmission rotor 310 on the first side Da1 in the axial direction Da and the end portion of the rotor 3 on the second side Da2 in the axial direction Da. As shown in FIG. 4, the second coupling 420 includes a transmission-side coupling member 421 and a compressor-side coupling member 422.

The transmission-side coupling member 421 is fixed to the end portion of the transmission rotor 310 on the first side Da1 in the axial direction Da. The transmission-side coupling member 421 is fixed to the transmission rotor 310 by hydraulic fitting, shrink fitting, or the like.

The compressor-side coupling member 422 is fixed to the end portion of the rotor 3 on the second side Da2 in the axial direction Da. The compressor-side coupling member 422 is connected to the rotor 3 by a spline structure. The compressor-side coupling member 422 is fixed to the second shaft portion 61. That is, the second shaft portion 61 having external teeth and the compressor-side coupling member 422 having internal teeth are meshed and connected to each other. In addition, in the axial direction Da, an interval between the end portion of the transmission rotor 310 and the end portion of the rotor 3 is set to 400 mm or less. That is, an end surface of the second shaft portion 61 is located at a narrow interval of 400 mm or less from an end surface of the transmission rotor 310 on the first side Da1 in the axial direction Da.

### (Operations and Effects)

In the compressor 100 of the compressor system 1 having the above-described configuration, in order to increase the pressure of a light gas having a small molecular weight, such as a hydrogen gas, it is necessary to rotate the rotor 3 at a high speed of 15,000 rpm or more. In a case where the rotor 3 is rotated at a high speed of 15,000 rpm or more, the peripheral speed of the impeller 30 is 400 m/s or more. In order to increase the peripheral speed of the impeller 30, it is necessary to increase the diameter of the impeller 30. As the diameter of the impeller 30 is increased, the axial length of the rotor 3 is increased in proportion to the size of the impeller 30. Further, in a case where the rotor 3 having a long axial length is rotated at a high speed, the vibration generated in the rotor 3 is increased.

In addition, the diameter of the region supported by the first journal bearing 91 is 120 mm or less. That is, the size of the first journal bearing 91 that supports the rotor 3 is reduced. In such a small first journal bearing 91, it is not possible to sufficiently suppress vibration of the rotor 3 that is rotated at a high speed of 15,000 rpm or more.

Further, since the rotor 3 is configured by fixing the plurality of impellers 30 having a solid structure in a row, the thrust force generated in the thrust bearing 93 is increased. Therefore, it is necessary to increase the size of the thrust collar 511. In the present embodiment, the diameter of the thrust collar 511, which is a region supported by the thrust bearing 93, is formed to be larger than 120 mm, which is the diameter of the region supported by the first journal bearing 91. Therefore, the weight of the first shaft portion 51 on which the thrust collar 511 is formed is increased, the vibration of the end portion of the first shaft portion 51 is further increased, and the vibration of the entire rotor 3 is also increased.

As described above, in the rotor 3 that is rotated at a high speed, the vibration is increased due to various factors. On the other hand, the squeeze film damper 350 is disposed at the end portion of the rotor 3, in which the plurality of impellers 30 having a solid structure are fixed in a row, at a position far from the driving machine 200 in the axial direction Da. That is, the vibration of the end portion of the first shaft portion 51 that is not connected to another rotating machine is suppressed by the squeeze film damper 350. In particular, by using the squeeze film damper 350, the vibration of the end portion of the first shaft portion 51 is suppressed by using oil without direct contact, so that a destabilizing force generated at the end portion of the first shaft portion 51 can be reduced with high accuracy regardless of the type of the bearing portion 9. As a result, the vibration of the rotor 3 that is rotated at a high speed can be stably suppressed.

In addition, the squeeze film damper 350 is disposed on a side opposite to the first journal bearing 91 with respect to the thrust bearing 93 in the axial direction Da. In the rotor 3, a region on a side opposite to the first journal bearing 91 with respect to the thrust bearing 93 is a free end. Specifically, the end portion of the first shaft portion 51, which is a region on the first side Da1 in the axial direction Da with respect to the region supported by the first journal bearing 91 and the thrust bearing 93, is a free end that is not connected to another machine such as the transmission 300. Therefore, the end portion of the first shaft portion 51 is a region where the vibration is particularly large in the rotor 3. By disposing the squeeze film damper 350 in such a region, the vibration of the rotor 3 can be suppressed at a position where the vibration is the largest. As a result, the vibration of the rotor 3 that is rotated at a high speed can be effectively suppressed only by the squeeze film damper 350.

In addition, the impeller 30 has a solid structure. That is, the impeller 30 does not have a structure in which the impeller 30 is fixed to the outer peripheral surface of the shaft by shrink fitting or the like. Therefore, a large hole for inserting the shaft is not formed at the center of the impeller 30. Since the impeller 30 does not have a large hole, the strength of the impeller 30 with respect to the load generated by the centrifugal force can be significantly improved when the rotor 3 is rotated.

In addition, the balance piston portion 62 is disposed on the second side Da2 in the axial direction Da with respect to the plurality of impellers 30. Therefore, the thrust force acting from the second side Da2 toward the first side Da1 in the axial direction Da with respect to the rotor 3 can be reduced by a balance piston. Therefore, the size of the thrust collar 511 can be suppressed. Therefore, the weight of the first shaft portion 51 on which the thrust collar 511 is formed is reduced, and the vibration of the end portion of the first shaft portion 51 can be suppressed. As a result, the vibration of the rotor 3 rotated at a high speed can be suppressed at the end portion of the first shaft portion 51.

In addition, the compressor-side coupling member 422 of the second coupling 420 is connected to the second shaft portion 61 by the spline structure. Since the compressor-side coupling member 422 is connected by the spline structure without using hydraulic pressure, friction, or the like, the compressor-side coupling member 422 and the second shaft portion 61 are connected in a state of being physically in contact with each other in the circumferential direction Dc. Therefore, even in a case where the required power is as high as 1,000 kW or more and the rotation speed is 15,000 rpm or more, the connection between the second shaft portion 61 having a small diameter and the compressor-side coupling member 422 can be stably ensured. Further, by connecting the compressor-side coupling member 422 and the second shaft portion 61 in a state of being physically in contact with each other in the circumferential direction Dc, even in a case where the compressor-side coupling member 422 is lightened, the connection between the compressor-side coupling member 422 and the second shaft portion 61 can be stably ensured.

In addition, the end surface of the second shaft portion 61 in the axial direction Da is located at a narrow interval of 400 mm or less from the end surface of the transmission rotor 310 on the first side Da1 in the axial direction Da. The axial end distance of 400 mm or less is a value lower than the API standard determined for attaching and detaching the compressor-side coupling member 422 to and from the rotor 3. By narrowing the axial end distance between the rotor 3 and the transmission rotor 310 in this way, the size of the second coupling 420 can be suppressed. Therefore, the load generated in the second shaft portion 61 is reduced, and the vibration of the end portion of the second shaft portion 61 can be suppressed. As a result, the vibration of the rotor 3 that is rotated at a high speed can be suppressed at the end portion of the second shaft portion 61.

### (Other Embodiments)

Although the embodiments of the present disclosure have been described in detail above with reference to the drawings, the specific configuration is not limited to the embodiments and the present disclosure also includes design changes and the like without departing from the gist of the present disclosure.

The structure of the rotor 3 is not limited to the above-described structure as long as the structure is a structure that is capable of rotating at a high speed. That is, the structures or shapes of the impeller 30, the first shaft end member 50, and the second shaft end member 60 of the rotor 3 may be different.

In addition, the structure of the squeeze film damper 350 is not limited to a specific structure as long as the vibration of the rotor 3 can be indirectly suppressed via a fluid at the end portion of the rotor 3.

In addition, the compressor system 1 is not limited to a structure that necessarily includes the transmission 300. The compressor system 1 may have, for example, a structure in which the compressor 100 and the driving machine 200 are directly connected to each other. In this case, it is preferable that a coupling that connects the compressor 100 and the driving machine 200 has the same structure as the second coupling 420.

### <Supplementary Note>

The compressor 100 and the compressor system 1 described in the embodiment are understood as follows, for example.
(1) A compressor 100 according to a first aspect including: a rotor 3 configured to rotate around an axis O; a casing 2 is covered the rotor 3 from an outer side Dro in a radial direction Dr with respect to the axis O; and a squeeze film damper 350 disposed at an end portion of the rotor 3 and configured to indirectly suppress vibration of the rotor 3 via a fluid, in which the rotor 3 includes a plurality of impellers 30 that are adjacent to each other in an axial direction Da in which the axis O extends, and a bolt fastening portion 70 that has a plurality of bolts 71 each of which configured to collectively fix the plurality of impellers 30 arranged in the axial direction Da, each of the plurality of impellers 30 has a solid structure that is formed in a disk shape around the axis O and has a filled center, and the squeeze film damper 350 is disposed at the end portion of the rotor 3 that is not connected to another rotating machine in the axial direction Da.
   Accordingly, in the rotor 3, the vibration of the end portion that is not connected to the other rotating machine is suppressed by the squeeze film damper 350. By using the squeeze film damper 350, the vibration of the end portion of the rotor 3 is suppressed by using the oil without direct contact, so that a destabilizing force generated at the end portion of the rotor 3 can be reduced with high accuracy regardless of a type of a bearing portion 9. As a result, the vibration of the rotor 3 that is rotated at a high speed can be stably suppressed.
(2) The compressor 100 according to a second aspect is the compressor 100 of (1), further including: a bearing portion 9 configured to rotatably support the rotor 3 with respect to the casing 2, in which the bearing portion 9 includes a first journal bearing 91 and a second journal bearing 92 disposed to be separated from each other in the axial direction Da, and a thrust bearing 93 disposed on a side opposite to the second journal bearing 92 with respect to the first journal bearing 91 in the axial direction Da, and the squeeze film damper 350 is disposed on a side opposite to the first journal bearing 91 with respect to the thrust bearing 93 in the axial direction Da.
   In the rotor 3, a region on the side opposite to the first journal bearing 91 with respect to the thrust bearing 93 is a free end. Therefore, the region is a region where the vibration is particularly large in the rotor 3. By disposing the squeeze film damper 350 in such a region, the vibration of the rotor 3 can be suppressed at a position where the vibration is the largest. As a result, the vibration of the rotor 3 that is rotated at a high speed can be effectively suppressed only by the squeeze film damper 350.
(3) A compressor system 1 according to a third aspect including: the compressor 100 of (1) or (2) configured to compress a working fluid; and a driving machine 200 having a drive shaft 210 rotating around an axis O and configured to drive the compressor 100, in which the squeeze film damper 350 is disposed at the end portion of the rotor 3 that is a position farthest from the driving machine 200 on the rotor 3 in the axial direction Da.
(4) The compressor system 1 according to the third aspect is the compressor system 1 of (3), further including: a transmission 300 disposed between the driving machine 200 and the compressor 100 in the axial direction Da and configured to change rotation of the driving machine 200 and transmit the rotation to the compressor 100 via a transmission rotor 310; and a coupling configured to connect the transmission rotor 310 and the rotor 3, in which the coupling is connected to the rotor 3 by a spline structure.

As a result, since the coupling is connected by the spline structure without using hydraulic pressure, friction, or the like, the coupling and the end portion of the rotor 3 are connected in a state of being physically in contact with each other in a circumferential direction Dc. Therefore, it is possible to stably secure the connection between the rotor 3 and the coupling.

### INDUSTRIAL APPLICABILITY

According to a compressor and a compressor system of the present disclosure, it is possible to stably suppress vibration of the rotor that is rotated at a high speed.

### REFERENCE SIGNS LIST

1 Compressor system
O Axis
200 Driving machine
210 Drive shaft
300 Transmission
310 Transmission rotor
100 Compressor
10 Bundle
2 Casing
21 Outer casing
211 End plate
212 Insertion hole
22 Diaphragm
   221 Suction port
222 Casing flow path
223 Discharge port
23 Head
231 Suction-side head
232 Discharge-side head
3 Rotor
30 Impeller
301 Impeller flow path
38 Bolt hole
41 Impeller shaft portion
42 Impeller outer peripheral portion
5 Shaft end member
50 First shaft end member
51 First shaft portion
511 Thrust collar
52 First supported portion
53 First enlarged diameter portion
531 First nut accommodating recess
532 First shaft end bolt hole
60 Second shaft end member
61 Second shaft portion
62 Balance piston portion
621 Second nut accommodating recess
622 Second shaft end bolt hole
70 Bolt fastening portion
71 Bolt
72 Nut
8 Seal portion
8A First seal portion
8B Second seal portion
8C Third seal portion
9 Bearing portion
91 First journal bearing
92 Second journal bearing
93 Thrust bearing
95 Bearing holder
96 Bearing cover
350 Squeeze film damper
351 Inner member
351a Oil supply hole
352 Seal member
353 Cover member
410 First coupling
420 Second coupling
421 Transmission-side coupling member
422 Compressor-side coupling member
Da Axial direction
Da1 First side
Da2 Second side
Dc Circumferential direction
Dr Radial direction
Dri Inner side
Dro Outer side

## Claims

1. A compressor comprising:
a rotor configured to rotate around an axis;
a casing is covered the rotor from an outer side in a radial direction with respect to the axis; and
a squeeze film damper disposed at an end portion of the rotor and configured to indirectly suppress vibration of the rotor via a fluid,
wherein the rotor includes a plurality of impellers that are adjacent to each other in an axial direction in which the axis extends, and a bolt fastening portion that has a plurality of bolts each of which configured to collectively fix the plurality of impellers arranged in the axial direction,
each of the plurality of impellers has a solid structure that is formed in a disk shape around the axis and has a filled center, and
the squeeze film damper is disposed at the end portion of the rotor that is not connected to another rotating machine in the axial direction.

2. The compressor according to Claim 1, further comprising:
a bearing portion configured to rotatably support the rotor with respect to the casing,
wherein the bearing portion includes
a first journal bearing and a second journal bearing disposed to be separated from each other in the axial direction, and
a thrust bearing disposed on a side opposite to the second journal bearing with respect to the first journal bearing in the axial direction, and
the squeeze film damper is disposed on a side opposite to the first journal bearing with respect to the thrust bearing in the axial direction.

3. A compressor system comprising:
a compressor according to Claim 1 or 2 configured to compress a working fluid; and
a driving machine having a drive shaft rotating around an axis and configured to drive the compressor,
wherein the squeeze film damper is disposed at the end portion of the rotor that is a position farthest from the driving machine on the rotor in the axial direction.

4. The compressor system according to Claim 3, further comprising:
a transmission disposed between the driving machine and the compressor in the axial direction and configured to change rotation of the driving machine and transmit the rotation to the compressor via a transmission rotor; and
a coupling configured to connect the transmission rotor and the rotor,
wherein the coupling is connected to the rotor by a spline structure.
